# EUROPÄISCHE PATENTSCHRIFT

(11) **EP 2 216 143 B1**
(45) Veröffentlichungstag und Bekanntmachung des Hinweises auf die Patenterteilung: **02.01.2013**
(21) Anmeldenummer: 10000962.0
(22) Anmeldetag: 30.01.2010
(51) Int. Cl.: B25G 1/04, B25G 1/06, A01B 1/22, A01G 3/00, B25F 5/02, A01D 34/90

(54) **Handführbares Gerät mit einem teleskopierbaren Stiel und Gerätesystem mit einem solchen Gerät**
Handheld device with a telescopic handle and device system with such a device
Appareil pouvant être guidé manuellement doté d'un manche télescopique et système d'appareil doté d'un tel appareil

(30) Priorität: 05.02.2009 DE 102009007661
(43) Veröffentlichungstag der Anmeldung: 11.08.2010
(73) Patentinhaber: GARDENA Manufacturing GmbH, 89079 Ulm (DE)
(72) Erfinder: Rief, Joachim, 88422 Alleshausen (DE)

(56) Entgegenhaltungen:
- EP-A1- 0 893 045
- WO-A1-96/25843
- US-A1- 2006 096 135

## Beschreibung

Die Erfindung betrifft ein handführbares Gerät, insbesondere ein Gartengerät mit teleskopierbarem Stiel, und ein Gerätesystem mit einem solchen Gerät.

Handführbare Gartengeräte mit teleskopierbarem Stiel sind an sich in verschiedener Ausführung bekannt, beispielsweise als handbetätigte Astschneider oder als motorisch angetriebene Rasentrimmer oder Heckenscheren. Die Teleskopierbarkeit des Stiels erlaubt vorteilhafterweise z. B. bei einem Rasentrimmer die Anpassung an die Körpergröße eines Benutzers oder insbesondere bei Heckenscheren das Arbeiten in unterschiedlichen Höhen. Darüber hinaus ist es bekannt, Innenteil und Außenteil des teleskopierbaren Stiels auch relativ zueinander verdrehbar zu verbinden, um insbesondere unterschiedliche Ausrichtungen eines am freien Ende des Innenteils angeordneten Werkzeugs relativ zu einer an dem Außenteil angeordneten Handgriffanordnung zu ermöglichen.

Bei Anordnungen mit einem durch Winkelanschlagstrukturen begrenzten Drehwinkelbereich zwischen zwei Winkelendpositionen ergeben sich teilweise Instabilitäten der Führung des Innenteils im Außenteil gegenüber quer zur Längsachse gerichteten Kräften.

In der US 2006/0096135 A1 ist ein einstellbarer langgestreckter Griff für ein tragbares Werkzeug beschrieben. Ein oberes und unteres Rohr sind koaxial zueinander angeordnet und teleskopartig miteinander verbunden. Ein Verbindungsstück ist zum zeitweiligen Feststellen des oberen und unteren Rohres aneinander vorgesehen. Das Verbindungsstück umfasst einen Klemmmechanismus, der das obere und untere Rohr umschließt.

Der Erfindung liegt die Aufgabe zugrunde, ein handführbares Gerät mit einer teleskopierbaren Stielanordnung, welche bei großem begrenzten Drehwinkelbereich eine stabile Führung und Abstützung des Innenteils im Außenteil gewährleistet, sowie ein Gerätesystem mit einem solchen Gerät anzugeben.

Die Erfindung ist im Patentanspruch 1 beschrieben. Die abhängigen Ansprüche enthalten vorteilhafte Ausgestaltungen und Weiterbildungen der Erfindung.

Das Stützelement bewirkt auf vorteilhafte Weise eine Abstützung des inneren Endes des Innenteils in radialer Richtung in Drehwinkelbereichen, in welchen wegen der Drehbarkeit des Innenteils relativ zum Außenteil eine radiale Abstützung über die Längsführung und die Winkelanschlagstrukturen und Gegenanschlagstrukturen allein nicht mehr hinreichend gewährleistet ist. Dabei ist die radiale Abstützung des Innenteils an dessen innerem Ende durch die Kopplung des Stützelements an die Längsverschiebung des Innenteils relativ zum Außenteil gewährleistet, wobei das an dem inneren Ende des Innenteils angeordnete Stützelement immer bei dem inneren Ende verbleibt und in der Längsführung des Außenteils längsverschiebbar geführt ist. Durch die relative Verdrehbarkeit zwischen Innenteil und Stützelement braucht das Stützelement nicht relativ zum Außenteil verdrehbar sein und kann in allen Längspositionen relativ zu dem Außenteil im Rahmen der Teleskopierbarkeit eine gleichmäßige Abstützung des inneren Endes des Innenteils in der Längsführung bilden.

Das Gerät ist vorteilhafterweise ein erstes Gerät Teil eines Gerätesystems, welches wenigstens ein weiteres Gerät enthält, wobei bei diesem weiteren Gerät das Innenteil bezüglich der gleich gestalteten Längsführung des Außenteils längsverschiebbar, aber nicht um die Längsachse verdrehbar ist. Das innere Ende des Innenteils kann dabei bei dem weiteren Gerät einen in definierter Winkelposition zu der Gegenanschlagstruktur in diese eingreifende Fixierstruktur aufweisen und sich radial nach allen Seiten an der Längsführung des Außenteils abstützen.

In vorteilhafter Weiterbildung kann vorgesehen sein, dass das Innenteil bei dem weiteren Gerät an seinem inneren Ende sowohl dieselbe Anschlagstruktur als auch dasselbe Stützelement wie das erste Gerät enthält, die Anschlagstruktur aber in einer weiteren Winkelposition, welche von dem Drehwinkelbereich beim ersten Gerät verschieden ist, mit dem Stützelement verbindbar und in das Außenteil einsetzbar ist und in dieser weiteren Winkelposition relativ zu dem Außenteil längsverschiebbar, aber nicht verdrehbar geführt ist.

Durch Verwendung desselben Außenteils und/oder desselben Innenteils können gleiche Bauteile sowohl für Geräte mit verdrehbarem Innenteil als auch mit nicht verdrehbarem Innenteil eingesetzt und dadurch mit höheren Stückzahlen besonders kostengünstig hergestellt werden.

Das Außenteil kann insbesondere fest mit einer Handgriffanordnung verbunden oder Teil einer solchen sein.

Die Erfindung ist nachfolgend anhand bevorzugter Ausführungsbeispiele unter Bezugnahme auf die Abbildungen noch eingehend veranschaulicht. Dabei zeigt:
- Fig. 1: ein handführbares Gerät mit einer Teleskopstielanordnung,
- Fig. 2: Komponenten eines Innenteils,
- Fig. 3: eine Ansicht zu Fig. 2 mit zusammengebauten Innenteil- komponenten und Längsführung,
- Fig. 4: das innere Ende des Innenteils in Ansicht in Längsrichtung,
- Fig. 5: Winkel-Raststrukturen zwischen Rohrende und Stützelement,
- Fig. 6: ein inneres Ende eines nicht verdrehbaren Innenteils,
- Fig. 7: eine Ansicht des Innenteils nach Fig. 6 in Längsrichtung,
- Fig. 8: eine nicht verdrehbare Variante zu Fig. 3,
- Fig. 9: eine Ansicht des Innenteils nach Fig. 8 in Längsrichtung.

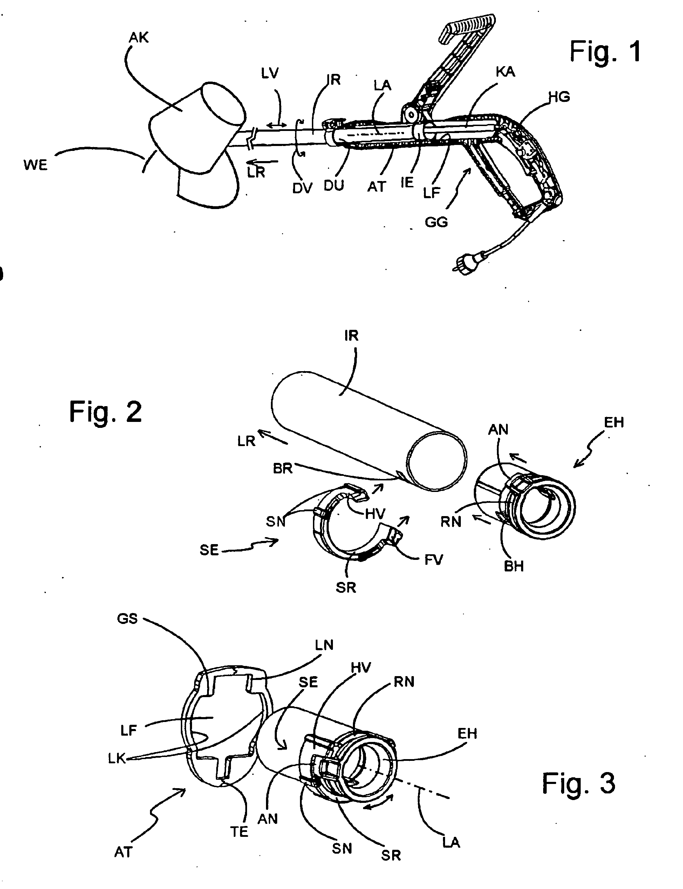

Fig. 1 zeigt in seitlicher, teilweise geschnittener Ansicht ein handführbares Gerät in Form eines Rasentrimmers mit einem Grundgehäuse GG, an welchem ein Handgriff HG angeordnet ist, welcher vorteilhafterweise auch einstückig als Spritzgussteil mit dem Grundgehäuse GG ausgeführt sein kann. Ein Teil des Grundgehäuses GG bildet als ein Außenteil AT eine Längsführung LF, innerhalb welcher ein Innenteil mit einem Innenrohr IR und einem inneren Ende IE in Längsrichtung LR verschiebbar geführt ist. Das Innenrohr IR tritt im Bereich einer Durchführung DU, welche insbesondere eine Klemmeinrichtung, beispielsweise mit einer Überwurfmutter oder einen Klemmhebel enthalten kann, aus dem Grundgehäuse bzw. dem Außenteil AT aus und führt zu einem an dem dem Grundgehäuse GG in Längsrichtung abgewandten Ende angeordneten Arbeitskopf AK eines Geräts, in welchem ein vorzugsweise elektrischer Antriebsmotor angeordnet ist, welcher ein Werkzeug WE, beispielsweise eine rotierende Schneidklinge oder einen rotierenden Schneidfaden antreibt. Die Längsverschiebbarkeit des Innenteils ist durch den Doppelpfeil LV angedeutet. Zusätzlich ist durch den gekrümmten Doppelpfeil DV angedeutet, dass das Innenteil relativ zu dem Grundgehäuse GG um die von Längsführung LF und Innenrohr IR gemeinsame Längsachse LA verdrehbar sein soll. Das Innenteil ist vorteilhafterweise hohl und umgibt ein Energieübertragungselement, beispielsweise ein elektrisches Kabel KA.

Fig. 2 zeigt Komponenten einer bevorzugten Ausführungsform für das innere Ende IE des Innenteils. Hierbei ist ein vorzugsweise metallisches Innenrohr IR vorgesehen, an dessen innerhalb der Längsführung LF liegendem Ende erste Befestigungsstrukturen BR, beispielsweise eine oder mehrere Eindrückungen vorgesehen sind. Eine Endhülse EH, welche vorteilhafterweise als Kunststoff-Spritzgussteil ausgeführt sein kann, besitzt korrespondierende weitere Befestigungsstrukturen BH, beispielsweise mit einem Rastvorsprung, welche nach Einsetzen der Endhülse EH in die Öffnung des Rohres IR mit den Befestigungsstrukturen BR zusammenwirken und die Endhülse EH kraftschlüssig und/oder vorzugsweise formschlüssig an dem Rohrende fixieren.

An der Endhülse EH ist eine Anschlagstruktur in Form eines von der im wesentlichen kreiszylindrischen Außenflächen der Endhülse EH radial abstehenden Anschlagnockens AN vorgesehen. Dieser Anschlagnocken AN erstreckt sich vorteilhafterweise in Längsrichtung mit einem Fortsatz, welcher vorteilhafterweise radial mit dem Rohrende des Innenrohrs IR überlappt und auf der Außenseite des Innenrohrs liegt, wogegen die Endhülse EH überwiegend innerhalb des Innenrohrs IR angeordnet ist und über das Ende des Innenrohrs vorsteht.

Als weitere Komponente des inneren Endes des Innenrohrs ist ein Stützelement SE vorgesehen, welches das Innenrohr IR an dessen Außenseite umgibt, wobei vorzugsweise das Stützelement SE das Innenrohr IR nicht vollständig, sondern lediglich über einen Winkel von mehr als 180° und weniger als 360°, insbesondere zwischen 240° und 300° umgibt. Das Stützelement SE ist vorteilhafterweise als eine ringsegmentförmige Klammer ausgebildet, welche unter elastischer Aufweitung quer zur Längsrichtung seitlich auf das Innenrohr IR aufschnappbar ist und nach dem Aufschnappen an der Außenfläche des Innenrohrs anliegt, wobei das Stützelement SE vorteilhafterweise unter leichter elastischer Vorspannung an dem Außenrohr IR anliegen kann.

Das Stützelement SE enthält insbesondere ein Ringsegment SR, welches vorteilhafterweise den bereits genannten bevorzugten Winkelbereich um die Längsachse einnimmt. Vorteilhafterweise sind an den in Umfangsrichtung entgegen gesetzten Enden des Ringsegments SR entgegen der Längsrichtung LR gerichtete Vorsprünge HV vorgesehen, an deren Innenseite Führungsvorsprünge FV vorgesehen sind. Solche Führungsvorsprünge FV wirken mit einer an der Endhülse EH vorgesehenen Ringnut RN zusammen, um das Stützelement SE axial auf einfache und vorteilhafte Weise mit der Endhülse EH zu koppeln und zugleich eine relative Verdrehung zwischen Endhülse EH und Stützelement SE zu ermöglichen. Da die Endhülse EH und das Innenrohr IR fest miteinander verbunden sein sollen, ist auch das Innenrohr IR relativ zu dem Stützelement SE in dem in Fig. 3 skizzierten zusammengesetzten Zustand des Innenrohrendes um die Längsachse LA verdrehbar.

An der dem Innenrohr abgewandten Außenseite des Ringsegments SR des Stützelements SE sind Stütznocken SN ausgebildet, welche radial über die übrigen Außenflächenabschnitte des Ringsegments SR vorstehen.

Fig. 3 zeigt das aus den Komponenten der Fig. 2 komplettierte innere Ende des Innenteils sowie die Längsführung LF in dem Außenteil AT, von welchem lediglich ein scheibenförmiger Ausschnitt dargestellt ist. Der Anschlagnocken AN liegt in Umfangsrichtung innerhalb des Verlaufs des Ringsegments SR zwischen den Haltevorsprüngen HV und überlappt in axialer Richtung mit diesen. Die Führungsvorsprünge FV liegen in der Ringnut RN der Endhülse EH ein, so dass das Innenrohr IR mit der Endhülse EH relativ zu dem Stützelement SE um die Längsachse verdrehbar bleibt.

Die Längsführung LF in dem Innenteil AT besitzt im Querschnitt kreissegmentförmige Abschnitte LK, welche in Umfangsrichtung an entgegen gesetzten Enden in Gegenanschlagschultern GS als Gegenanschlagstruktur übergehen. Zusätzlich kann vorgesehen sein, dass in Umfangsrichtung außerhalb der Kreisringabschnitte LK und zwischen den Schultern GS eine Längsnut LN ausgebildet ist. Die Längsführung ist der Längsnut LG gegenüber liegend durch einen weiten Konturabschnitt LG begrenzt. Die Querschnittskontur der Längsführung ist in weiten Teilen variabel. Das Außenteil AT enthält vorteilhafterweise zwei an einer Trennebene TE zusammen gefügte Halbschalen. Der Querschnitt der Längsführung setzt sich in Längsrichtung in seinen wesentlichen Teilen gleichbleibend fort.

Der Durchmesser des Ringsegment-Abschnitts LK des Querschnitts der Längsführung entspricht dem Außendurchmesser des auf das Innenrohr IR aufgesetzten Stützelements SE im Bereich von dessen Stütznocken SN. Die Stütznocken SN liegen dann bei in die Längsführung eingesetztem innerem Ende des Innenteils an der Innenwand der kreissegmentförmigen Abschnitte LK der Längsführung an. Die übrigen Abschnitte der Außenfläche des Ringsegments SR des Stützelements SE sind demgegenüber um ein geringes radiales Maß zur Längsachse hin zurückgesetzt und berühren die Innenwand der Längsführung nicht, wodurch die Reibung bei der Längsverschiebung des Innenteils relativ zum Außenteil vorteilhafterweise besonders gering gehalten werden kann.

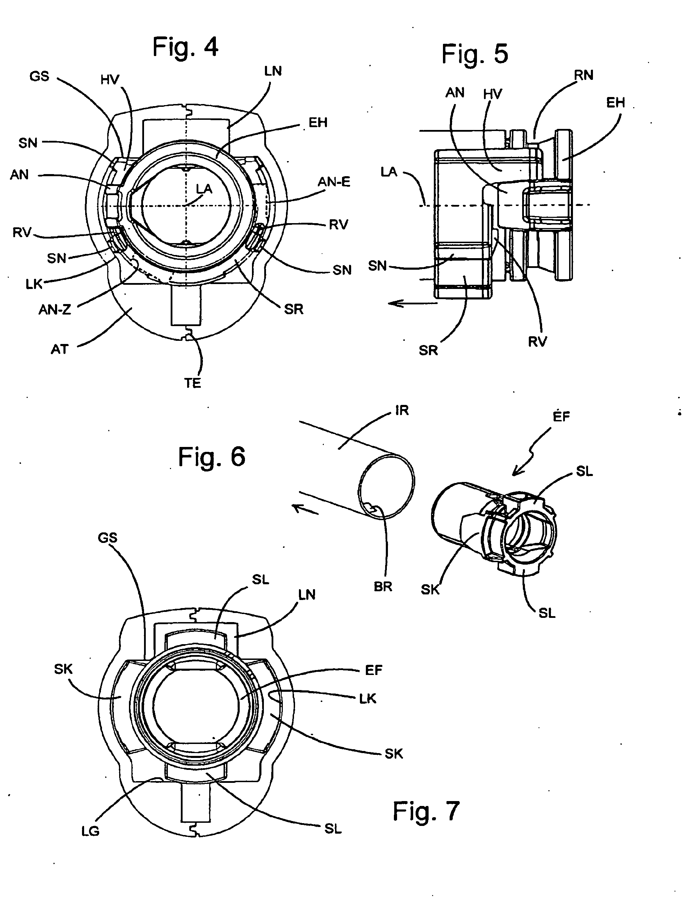

Fig. 4 zeigt eine Ansicht der aus den in Fig. 3 skizzierten Teilen zusammen gesetzten Anordnung mit Blickrichtung in Richtung der Längsachse LA. Die Endhülse EH ist hohl, um ein Energieversorgungsmittel, beispielsweise ein Elektrokabel, zwischen dem Grundgehäuse und dem Arbeitskopf durch das Innenteil geschützt hindurch zu führen.

Aus Fig. 4 ist ersichtlich, dass das Stützelement SE mit den durch die Vorsprünge HV gekennzeichneten Enden an den Gegenanschlagschultern GS des Längsführungsquerschnitts anliegt und dadurch innerhalb der Längsführung unverdrehbar gehalten ist. Das Stützelement SE stützt sich radial mit den Stütznocken SN gegen die Innenwand des kreissegmentförmigen Wandabschnitts LK der Längsführung nach mehreren Seiten radial ab. Durch die einzelnen diskreten Abstützungen mit jeweils gegenüber der Gesamt-Außenfläche des Stützelements kleiner Abstützfläche ergibt sich eine geringe Reibungskraft bei der Längsverschiebung des Innenteils relativ zum Außenteil. Der gegenseitige Winkelversatz der in Umfangsrichtung aufeinander folgenden Stütznocken beträgt vorteilhafterweise weniger als 90°.

In Fig. 4 ist der Abstandsnocken AN der Endhülse EH in einer bezüglich einer Drehung im Uhrzeigersinn Endposition gezeichnet, in welcher der Anschlagnocken AN an dem Vorsprung HV des Stützelements anliegt, welcher durch die Anlage des Stützelements an der Gegenanschlagsschulter GS seinerseits als drehfest anzusehen ist und als Teil der Gegenanschlagsstruktur in diesem Beispiel dient. Das Innenrohr IE mit Endhülse EH kann dadurch nicht weiter im Uhrzeigersinn relativ zum Außenteil gedreht werden.

Vorteilhafterweise kann in der in Fig. 4 mit durchgezogener Linie eingezeichneten Position des Anschlagnockens AN eine für den Benutzer spürbare Verrastung vorgesehen sein, deren Rasthaltekraft manuell durch den Benutzer überwindbar ist, diesem aber haptisch die Herstellung des Eingriffs anzeigen kann und/oder das Innenrohr gegen unbeabsichtigtes Verdrehen aus der Endposition sichert. Eine vorteilhafte Ausführungsform einer solchen Verrastung ist in Fig. 5 mit Blickrichtung senkrecht zur Längsachse dargestellt. An dem entgegen der Längsrichtung LR dem freien Ende der Endhülse EH zu weisenden Rand des Ringsegments SR ist ein Rastvorsprung RV ausgebildet. Zur Überwindung des Rastvorsprungs kann das Ringsegment SR, welches axial lediglich über die Vorsprünge HV und den Eingriff der Führungsvorsprünge FV in die Ringnut RN gegeben ist, in axialer Richtung geringfügig ausweichen und der Anschlagnocken AN kann den Rastvorsprung RV überwinden.

In Fig. 4 sind mit unterbrochener Linie eine Zwischen-Winkelstellung AN-Z und eine der mit durchgezogener Linie dargestellten ersten Endstellung des Anschlagnockens entgegen gesetzte Endstellung AN-E des Anschlagnockens AN mit entsprechender Winkelverdrehung des Innenrohrs relativ zum Außenteil dargestellt. In der Endposition AN-E liegt der Anschlagnocken AN wiederum an einem Vorsprung HV des Stützelements und einer Schulter GS der Längsführung als Gegenanschlagsstruktur und das Innenrohr kann nicht weiter entgegen dem Uhrzeigersinn verdreht werden. Der Drehwinkelbereich zwischen der mit durchgezogener Linie eingezeichneten Winkel-Endposition des Rastnockens AN und der anderen mit unterbrochener Linie eingezeichneten und als AN-E bezeichneten Winkel-Endposition beträgt vorteilhafterweise 180°, so dass zwei entgegen gesetzt ausgerichtete Endpositionen einstellbar sind. Zusätzlich sind alle Zwischenpositionen AN-Z frei wählbar einstellbar.

Der Winkelbereich, über den das Innenteil um die Längsachse relativ zum Außenteil verdrehbar ist, kann auch von 180° verschieden, insbesondere größer sein. Das Stützelement kann sich bei in die Längsführung eingesetztem Zustand nicht von dem Innenrohr oder der Endhülse lösen, da eine dafür notwendige radiale Aufweitung durch die radiale Abstützung an der Innenwand der Längsführung verhindert ist.

Die Führungsnut LN ist in dem in Fig. 3 bis Fig. 5 skizzierten Beispiel ohne besondere Funktion.

In Fig. 6 ist eine Ausführung eines Innenteils für ein weiteres Gerät innerhalb eines Gerätesystems mit gleicher Längsführung wie in den vorangegangene Beispielen dargestellt skizziert, wobei bei einem solchen weiteren Gerät eine Verdrehbarkeit des Innenrohrs relativ zum Außenteil verhindert sein soll. Hierfür ist in dem Beispiel nach Fig. 6 eine Endhülse EF skizziert, welche wiederum in Längsrichtung LR in das Ende eines Innenrohres IR einsetzbar und dort kraftschlüssig und/oder vorzugsweise formschlüssig festlegbar ist. Diese Endhülse EF weist gegen eine im wesentlichen kreiszylindrische Außenfläche radial nach außen weiter abstehende Vorsprünge SL, SK auf, welche gemäß der analog zu Fig. 4 gewählten Ansicht in Fig. 7 die Endhülse EF und damit das innere Ende des Innenteils innerhalb der Längsführung LF radial abstützen. Dabei liegt der Vorsprung SL in der Nut LN ein. Die Vorsprünge SK stützen die Endhülse radial insbesondere quer zur Trennebene in entgegen gesetzten Richtungen an der Innenwand der kreisförmigen Abschnitte LK ab und verhindern durch gleichzeitigen Anschlag an beiden Gegenanschlagschultern ein Verdrehen der Endhülse in der Längsführung. Ein Vorsprung SL stützt sich radial an dem Konturabschnitt LG in der Zeichnung nach unten ab. Eine radiale Abstützung in der Zeichnung nach oben ist insbesondere durch den Anschlag der Vorsprünge SK an den Gegenanschlagschultern GS gegeben. Die Endhülse EF ist damit sowohl radial als auch gegen Verdrehung innerhalb der Längsführung fixiert, aber weiterhin in Längsrichtung verschiebbar. Die Querschnittskontur der Längsführung ist auch in diesem Beispiel in großem Umfang variabel.

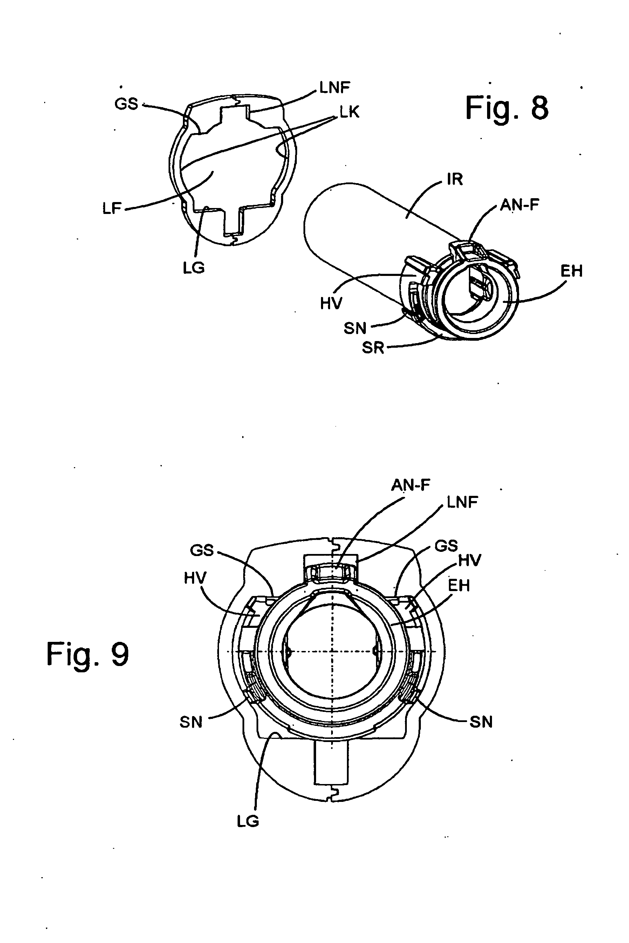

Fig. 8 zeigt eine alternative Ausführung eines Geräts mit einem nicht relativ zum Außenteil AT verdrehbaren Innenteil, wobei eine solche Ausführung dieselben Komponenten verwendet wie die Ausführung nach Fig. 2 bis Fig. 5. In dem Beispiel nach Fig. 8 ist die relative Drehlage von Stützelement SE und Endhülse EH so, dass der Winkelanschlagnocken AN in einer mit AN-F bezeichneten Position außerhalb des Winkelbereichs des Ringsegments SR des Stützelements zwischen den in Umfangsrichtung entgegen gesetzten Enden des Stützelements liegt. Das Stützelement SE ist wiederum mit den in der Ringnut RN einliegenden Vorsprüngen FV axial an eine Verschiebung der Endhülse EH gekoppelt. Bei in die Längsführung eingesetztem inneren Ende des Innenteils ist wiederum das Stützelement durch beidseitigen Anschlag an den Schultern GS des Querschnitts der Längsführung verdrehsicher gehalten und mit den Stütznocken SN gegen die Innenwand des kreissegmentförmigen Abschnitts LK der Längsführung radial abgestützt. Der Anschlagnocken AN-F liegt in einer Längsführungsnut LNF der Längsführung drehgesichert ein, wie in der zu Fig. 4 und Fig. 7 analogen Ansicht in Fig. 9 dargestellt ist. Die Breite der Längsnut LNF ist in Fig. 8 und Fig. 9 an die Breite des Anschlagnockens AN angepasst und geringer als die Breite der Längsnut LN in Fig. 3 und Fig. 4. In der Anwendung nach Fig. 3 und Fig. 4 ist aber offensichtlich die Breite der Längsnut LN für die begrenzte Verdrehbarkeit und die Längsverschiebbarkeit unerheblich und könnte auch das Maß der Breite des Anschlagnockens wie in Fig. 8 und Fig. 9 besitzen. In entsprechender Weise könnten auch die Vorsprünge SK im Beispiel der Fig. 6 und Fig. 7 eine geringere Breite besitzen und in die verengte Längsnut LNF passen. Zwar wäre prinzipiell die Endhülse EH in der in Fig. 8 dargestellten Position noch relativ zu dem Stützelement SE verdrehbar, bei in die Längsführung eingesetztem inneren Ende des Innenteils sind aber sowohl Stützelement SE als auch Endhülse EH jeweils für sich getrennt gegen Verdrehung gesichert, so dass das Stützelement zuverlässig eine radiale Abstützung nach allen Seiten bewirken kann und der Anschlagnocken in seiner Position AN-F in der Längsführungsnut LNF eine Verdrehung des Innenteils relativ zum Außenteil verhindert.

In den vorangegangenen Beispielen weist die Längsführung einen Querschnitt mit kreissegmentförmigen Abschnitten LK auf. Deren Kreissegmentform ist nicht zwingend, da eine radiale Abstützung des relativ zur Längsführung nicht verdrehbaren Stützelements offensichtlich auch mit anderen Querschnittsformen möglich ist. Die Kreissegmentform der Abschnitte LK des Querschnitts der Längsführung ist aber vorteilhaft angepaßt an die kreisrunde Form des Innenrohrs und führt zu einem insgesamt geringen Volumen der Längsführung.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Handführbares Gerät mit einer teleskopierbaren Stielanordnung, welche ein relativ zu einem Außenteil (AT) in Richtung einer Längsachse (LA) in einer Längsführung (LF) verschiebbares und um die Längsachse (LA) über einen Drehwinkelbereich zwischen zwei Endwinkelstellungen (AN-E) drehbares Innenteil (IR) umfasst, welches an einer Durchführung (DU) durch das Außenteil (AT) und an einem innerhalb des Außenteils (AT) geführten inneren Ende quer zur Längsachse (LA) abgestützt ist und eine erste Winkelanschlagstruktur (AN) aufweist, welche mit einer bezüglich des Außenteils (AT) drehfesten zweiten Gegenanschlagstruktur (GS) als Drehbegrenzung zusammenwirkt, **dadurch gekennzeichnet, dass** an dem inneren Ende (IE) des Innenteils (IR) ein Stützelement (SE) relativ zu dem Innenteil (IR) drehbar angeordnet ist und das Innenteil (IR) radial gegen die Längsführung (LF) im Außenteil (AT) abstützt, und dass das Stützelement (SE) an die Längsverschiebung des Innenteils (IR) relativ zum Außenteil (AT) gekoppelt ist.

2. Gerät nach Anspruch 1, **dadurch gekennzeichnet, dass** an der Durchführung (DU) eine mit dem Außenteil (AT) verbundene lösbare Arretiereinrichtung zum Festlegen des Innenteils (IR) mittels einer Klemmeinrichtung vorgesehen ist.

3. Gerät nach Anspruch 2, **dadurch gekennzeichnet, dass** die Arretiereinrichtung eine kraftschlüssige Festlegung des Innenteils (IR) relativ zum Außenteil (AT) bewirkt.

4. Gerät nach Anspruch 2 oder 3, **dadurch gekennzeichnet, dass** die Arretiereinrichtung eine um die Längsachse (LA) drehbare Überwurfmutter oder einen Klemmhebel als Betätigungselement enthält.

5. Gerät nach einem der Ansprüche 1 bis 4, **dadurch gekennzeichnet, dass** das Innenteil (IR) über einen Drehwinkelbereich von mehr als 90°, insbesondere wenigstens 180° relativ zu dem Außenteil (AT) um die Längsachse (LA) drehbar ist.

6. Gerät nach einem der Ansprüche 1 bis 5, **dadurch gekennzeichnet, dass** das Stützelement (SE) in diskreten Winkelpositionen radial gegen die Längsführung (LF) im Außenteil (AT) abgestützt ist.

7. Gerät nach einem der Ansprüche 1 bis 6, **dadurch gekennzeichnet, dass** das Innenteil (IR) in mehreren Winkel-Zwischenpositionen (AN-Z), vorzugsweise kontinuierlich zwischen zwei Winkel-Endpositionen (AN-E) relativ zu dem Außenteil (AT) festlegbar ist.

8. Gerät nach einem der Ansprüche 1 bis 7, **dadurch gekennzeichnet, dass** das Innenteil (IR) in mehreren Längs-Zwischenpositionen, vorzugsweise kontinuierlich, zwischen zwei Längs-Endpositionen relativ zu dem Außenteil (AT) festlegbar ist.

9. Gerät nach einem der Ansprüche 1 bis 8, **dadurch gekennzeichnet, dass** das Stützelement (SE) an dem Innenteil (IR) Haltestrukturen aufweist, welche in Gegenhaltestrukturen an dem Innenteil (IR) eingreifen und bei bezüglich der Längsachse (LA) axialer Festlegung eine Verdrehung zwischen Stützelement (SE) und Innenteil (IR) ermöglichen.

10. Gerät nach Anspruch 9, **dadurch gekennzeichnet, dass** Haltestrukturen und Gegenhaltestrukturen eine Ringnut (RN) und/oder einen Ringsteg um die Längsachse (LA) enthalten.

11. Gerät nach einem der Ansprüche 1 bis 10, **dadurch gekennzeichnet, dass** das Stützelement (SE) auf der der Durchführung (DU) axial zugewandten Seite der Winkelanschlagstrukturen des Innenteils (IR) angeordnet ist.

12. Gerät nach einem der Ansprüche 1 bis 11, **dadurch gekennzeichnet, dass** das Stützelement (SE) das Innenteil (IR) um mehr als 180° umgreift.

13. Gerät nach einem der Ansprüche 1 bis 12, **dadurch gekennzeichnet, dass** das Stützelement (SE) quer zur Längsachse (LA) unter elastischer Aufweitung auf das Innenteil (IR) aufschnappbar ist.

14. Gerät nach einem der Ansprüche 1 bis 13, **dadurch gekennzeichnet, dass** das Stützelement (SE) bezüglich des Außenteils (AT) unverdrehbar in diesem geführt ist.

15. Gerät nach einem der Ansprüche 1 bis 14, **dadurch gekennzeichnet, dass** das Stützelement (SE) einen Teil der Gegenanschlagstrukturen (GS) bildet.

16. Gerät nach Anspruch 7 oder einem der auf Anspruch 7 rückbezogenen Ansprüche, **dadurch gekennzeichnet, dass** Raststrukturen zwischen Innenteil (IR) und Stützelement (SE) in einer oder beiden Winkelendstellungen (AN-E) mit einer manuell überwindbaren Haltekraft ineinander einrasten.

17. Gerät nach einem der Ansprüche 1 bis 16, **dadurch gekennzeichnet, dass** das Innenteil (IR) ein vorzugsweise metallisches Rohr enthält.

18. Gerät nach Anspruch 17, **dadurch gekennzeichnet, dass** an dem inneren Ende (IE) des Innenteils (IR) ein Endstück (EH), welches die Winkelanschlagstruktur (AN) und die Gegenhaltemittel enthält, an dem Rohr befestigt ist.

19. Gerät nach einem der Ansprüche 1 bis 18, **dadurch gekennzeichnet, dass** durch das Innenteil (IR) in Richtung der Längsachse (LA) ein Energieübertragungsmittel hindurchgeführt ist.

20. Gerätesystem mit wenigstens einem ersten Gerät nach einem der Ansprüche 1 bis 19 und wenigstens einem weiteren Gerät, welches eine zu dem ersten Gerät gleiche Längsführung (LF) und ein bezüglich des Außenteils (AT) drehfest längsverschiebbar geführtes Innenteil (IR) der Stielanordnung aufweist.

21. Gerätesystem nach Anspruch 20, **dadurch gekennzeichnet, dass** das innere Ende (IE) des Innenteils (IR) bei dem weiteren Gerät verschieden von dem ersten Gerät ausgeführt ist.

22. Gerätesystem nach Anspruch 20, **dadurch gekennzeichnet, dass** an dem inneren Ende (IE) des Innenteils (IR) sowohl bei dem ersten als auch bei dem weiteren Gerät ein Stützelement (SE) und Anschlagstrukturen (AN) vorgesehen sind und dass die Winkel-Anschlagstrukturen in einer zweiten, von dem Drehwinkelbereich des ersten Geräts verschiedenen Winkelposition in das Außenteil (AT) einsetzbar sind.

## Claims

1. Manually guided apparatus with a telescopic handle arrangement, which comprises an inner part (IR) that is movable relative to an outer part (AT) in the direction of a longitudinal axis (LA) in a longitudinal guide (LF) and is rotatable about the longitudinal axis (LA) over a rotary angle range between two end angle positions (AN-E), which inner part is supported on a bushing (DU) through the outer part (AT) and on an inner end guided inside the outer part (AT) crosswise to the longitudinal axis (LA) and has a first angle stop structure (AN), which acts together with a second counter-stop structure (GS) as rotary limitation that is rotationally fixed with reference to the outer part (AT), **characterised by** that a support element (SE) is arranged on the inner end (IE) of the inner part (IR) rotatably relative to the inner part (IR) and supports the inner part (IR) radially against the longitudinal guide (LF) in the outer part (AT), and that the support element (SE) is coupled to the longitudinal displacement of the inner part (IR) relative to the outer part (AT).

2. Apparatus according to claim 1, **characterised by** that a detachable locking device connected to the outer part (AT) for fixing the inner part (IR) by means of a clamping device is provided on the bushing (DU).

3. Apparatus according to claim 2, **characterised by** that the locking device produces non-positive fixing of the inner part (IR) relative to the outer part (AT).

4. Apparatus according to claim 2 or 3, **characterised by** that the locking device contains a clamping nut rotatable about the longitudinal axis (LA) or a clamping lever as operating element.

5. Apparatus according to one of claims 1 to 4, **characterised by** that the inner part (IR) is rotatable about the longitudinal axis (LA) over a rotary angle range of more than 90°, in particular at least 180° relative to the outer part (AT).

6. Apparatus according to one of claims 1 to 5, **characterised by** that the support element (SE) is supported radially against the longitudinal guide (LF) in the outer part (AT) in discrete angular positions.

7. Apparatus according to one of claims 1 to 6, **characterised by** that the inner part (IR) can be fixed in several angle intermediate positions (AN-Z), preferably continuously between two angle end positions (AN-E) relative to the outer part (AT).

8. Apparatus according to one of claims 1 to 7, **characterised by** that the inner part (IR) can be fixed in several longitudinal intermediate positions, preferably continuously, between two longitudinal end positions relative to the outer part (AT).

9. Apparatus according to one of claims 1 to 8, **characterised by** that the support element (SE) has holding structures on the inner part (IR), which engage in counter-holding structures on the inner part (IR) and in the case of axial fixing with reference to the longitudinal axis (LA) permit a rotation between support element (SE) and inner part (IR).

10. Apparatus according to claim 9, **characterised by** that holding structures and counter-holding structures comprise an annular groove (RN) and/or an annular web about the longitudinal axis (LA).

11. Apparatus according to one of claims 1 to 10, **characterised by** that the support element (SE) is arranged on the side of the angle stop structures of the inner part (IR) axially facing the bushing (DU).

12. Apparatus according to one of claims 1 to 11, **characterised by** that the support element (SE) encompasses the inner part (IR) by more than 180°.

13. Apparatus according to one of claims 1 to 12, **characterised by** that the support element (SE) can be snapped onto the inner part (IR) crosswise to the longitudinal axis (LA) under elastic expansion.

14. Apparatus according to one of claims 1 to 13, **characterised by** that the support element (SE) is guided with reference to the outer part (AT) non-rotatably in the latter.

15. Apparatus according to one of claims 1 to 14, **characterised by** that the support element (SE) forms a part of the counter-stop structures (GS).

16. Apparatus according to claim 7 or one of the claims that refer back to claim 7, **characterised by** that latching structures between inner part (IR) and support element (SE) latch into one another in one or both angle end positions (AN-E) with a holding force that can be overcome manually.

17. Apparatus according to one of claims 1 to 16, **characterised by** that the inner part (IR) comprises a preferably metal tube.

18. Apparatus according to claim 17, **characterised by** that on the inner end (IE) of the inner part (IR), an end piece (EH), which contains the angle stop structure (AN) and the counter-holding means, is attached to the tube.

19. Apparatus according to one of claims 1 to 18, **characterised by** that an energy transfer means is led through the inner part (IR) in the direction of the longitudinal axis (LA).

20. Apparatus system with at least a first apparatus according to one of claims 1 to 19 and at least one other apparatus, which has a longitudinal guide (LF) identical to the first apparatus and an inner part (IR) of the handle arrangement that is guided longitudinally movably and rotationally fixed with reference to the outer part (AT).

21. Apparatus system according to claim 20, **characterised by** that the inner end (IE) of the inner part (IR) in the other apparatus is executed differently from the first apparatus.

22. Apparatus system according to claim 20, **characterised by** that a support element (SE) and stop structures (AN) are provided on the inner end (IE) of the inner part (IR) both on the first and on the other apparatus and that the angle stop structures are insertable in a second angular position different from the rotary angle range of the first apparatus into the outer part (AT).

## Revendications

1. Appareil pouvant être guidé manuellement, doté d'un système de manche télescopique qui comprend une partie interne (IR) qui peut se déplacer par rapport à une partie externe (AT) dans le sens d'un axe longitudinal (LA) dans un guide longitudinal (LF) et qui peut tourner autour de l'axe longitudinal (LA) sur une plage d'angle de rotation entre deux positions angulaires extrêmes (AN-E), laquelle partie interne (IR) s'appuie perpendiculairement à l'axe longitudinal (LA) sur une traversée (DU) dans la partie externe (AT) et sur une extrémité interne guidée à l'intérieur de la partie externe (AT) et présente une première structure de butée angulaire (AN) qui coopère avec une deuxième structure de butée antagoniste (GS) solidaire de la partie externe (AT) afin de limiter la rotation, **caractérisé en ce qu'**un élément d'appui (SE) est disposé au niveau de l'extrémité interne (IE) de la partie interne (IR) de manière à pouvoir tourner par rapport à la partie interne (IR) et soutient la partie interne (IR) radialement contre le guide longitudinal (LF) dans la partie externe (AT), et **en ce que** l'élément d'appui (SE) est couplé au déplacement longitudinal de la partie interne (IR) par rapport à la partie externe (AT).

2. Appareil selon la revendication 1, **caractérisé en ce qu'**un dispositif d'arrêt relié de manière détachable à la partie externe (AT) est prévu sur la traversée (DU) afin d'immobiliser la partie interne (IR) au moyen d'un dispositif de blocage.

3. Appareil selon la revendication 2, **caractérisé en ce que** le dispositif d'arrêt assure une immobilisation par adhérence de la partie interne (IR) par rapport à la partie externe (AT).

4. Appareil selon la revendication 2 ou la revendication 3, **caractérisé en ce que** le dispositif d'arrêt comporte un écrou d'accouplement tournant autour de l'axe longitudinal (LA) ou un levier de blocage servant d'élément actionneur.

5. Appareil selon l'une des revendications 1 à 4, **caractérisé en ce que** la partie interne (IR) peut tourner autour de l'axe longitudinal (LA) sur une plage d'angle de rotation supérieure à 90°, en particulier au moins égale à 180°, par rapport à la partie externe (AT).

6. Appareil selon l'une des revendications 1 à 5, **caractérisé en ce que** l'élément d'appui (SE) s'appuie dans des positions angulaires discrètes radialement contre le guide longitudinal (LF) dans la partie externe (AT).

7. Appareil selon l'une des revendications 1 à 6, **caractérisé en ce que** la partie interne (IR) peut être immobilisée dans plusieurs positions angulaires intermédiaires (AN-Z), de préférence en continu, entre deux positions angulaires extrêmes (AN-E) par rapport à la partie externe (AT).

8. Appareil selon l'une des revendications 1 à 7, **caractérisé en ce que** la partie interne (IR) peut être immobilisée dans plusieurs positions longitudinales intermédiaires, de préférence en continu, entre deux positions longitudinales extrêmes par rapport à la partie externe (AT).

9. Appareil selon l'une des revendications 1 à 8, **caractérisé en ce que** l'élément d'appui (SE) présente sur la partie interne (IR) des structures de retenue qui viennent en prise avec des structures de retenue antagonistes sur la partie interne (IR) et qui, en présence d'une immobilisation axiale par rapport à l'axe longitudinal (LA), permettent une torsion entre l'élément d'appui (SE) et la partie interne (IR).

10. Appareil selon la revendication 9, **caractérisé en ce que** les structures de retenue et les structures de retenue antagonistes comportent une gorge annulaire (RN) et/ou une nervure annulaire autour de l'axe longitudinal (LA).

11. Appareil selon l'une des revendications 1 à 10, **caractérisé en ce que** l'élément d'appui (SE) est disposé sur la face des structures de butée angulaire de la partie interne (IR) qui est dirigée vers la traversée (DU) dans le sens axial.

12. Appareil selon l'une des revendications 1 à 11, **caractérisé en ce que** l'élément d'appui (SE) enveloppe la partie interne (IR) sur plus de 180°.

13. Appareil selon l'une des revendications 1 à 12, **caractérisé en ce que** l'élément d'appui (SE) peut s'encliqueter sur la partie interne (IR) en s'élargissant élastiquement dans le sens perpendiculaire à l'axe longitudinal (LA).

14. Appareil selon l'une des revendications 1 à 13, **caractérisé en ce que** l'élément d'appui (SE) est guidé dans la partie externe (AT) de manière à ne pas pouvoir tourner par rapport à celle-ci.

15. Appareil selon l'une des revendications 1 à 14, **caractérisé en ce que** l'élément d'appui (SE) forme une partie des structures de butée antagonistes (GS).

16. Appareil selon la revendication 7 ou les revendications subordonnées à la revendication 7, **caractérisé en ce que** des structures d'encliquetage entre la partie interne (IR) et l'élément d'appui (SE) s'engagent les unes dans les autres dans une ou dans les deux positions angulaires extrêmes (AN-E) avec une force de retenue qui peut être surmontée manuellement.

17. Appareil selon l'une des revendications 1 à 16, **caractérisé en ce que** la partie interne (IR) comporte un tube de préférence métallique.

18. Appareil selon la revendication 17, **caractérisé en ce qu'**un embout (EH) qui comporte la structure de butée angulaire (AN) et le moyen de retenue antagoniste est fixé au tube à l'extrémité interne (IE) de la partie interne (IR).

19. Appareil selon l'une des revendications 1 à 18, **caractérisé en ce qu'**un moyen de transmission d'énergie est guidé dans la partie interne (IR) dans le sens de l'axe longitudinal (LA).

20. Système d'appareils comprenant au moins un premier appareil selon l'une des revendications 1 à 19 et au moins un autre appareil qui présente un guide longitudinal (LF) et une partie interne (IR) guidée de manière à pouvoir se déplacer longitudinalement sans tourner par rapport à la partie externe (AT) du système de manche identiques à celui du premier appareil.

21. Système d'appareils selon la revendication 20, **caractérisé en ce que** l'extrémité interne (IE) de la partie interne (IR) de l'autre appareil est configurée différemment de celle du premier appareil.

22. Système d'appareils selon la revendication 20, **caractérisé en ce qu'**un élément d'appui (SE) et des structures de butées (AN) sont prévus à l'extrémité interne (IE) de la partie interne (IR) aussi bien dans le premier appareil que dans l'autre appareil et **en ce que** les structures de butée angulaire peuvent être placées dans une deuxième position angulaire différente de la plage d'angle de rotation du premier appareil dans la partie externe (AT).
